Europäisches Patentamt

European Patent Office

Office européen des brevets

(19)

(11) Veröffentlichungsnummer: **0 373 458**
**A2**

(12) ## EUROPÄISCHE PATENTANMELDUNG

(21) Anmeldenummer: 89122272.1

(51) Int. Cl.5: **B32B  17/04**

(22) Anmeldetag: 02.12.89

(30) Priorität: 15.12.88 DE 3842216

(43) Veröffentlichungstag der Anmeldung:
20.06.90 Patentblatt  90/25

(84) Benannte Vertragsstaaten:
DE ES FR GB IT

(71) Anmelder: BAYER AG

D-5090 Leverkusen 1 Bayerwerk(DE)

(72) Erfinder: **Born, Eberhard, Dipl.-Ing.**
**Strundener Strasse 104**
**D-5000 Köln 80(DE)**
Erfinder: **Rest, Hartmut, Dr.**
**Am Alten Broich 157**
**D-4018 Langenfeld(DE)**

(54) Formkörper.

(57) Verbundkörper aus parallel zueinander angeordneten reaktivharzverstärkten Glasfaserprofilen, deren Zwischenräume mit einem Reaktionsharz gefüllt sind und der eine Deckschicht aus Kunststoff oder Kautschuk aufweist.

EP 0 373 458 A2

## Formkörper

Gegenstand der Erfindung ist ein druckfester Verbundkörper. In seiner einfachsten Form besteht er aus parallel zueinander angeordneten reaktivharz- oder thermoplastgebundenen Glasfaserprofilen, deren Zwischenräume mit einem Polymer, z.B. einem Reaktionsharz, gefüllt sind, sowie mindestens einer Deckschicht aus Kunststoff.

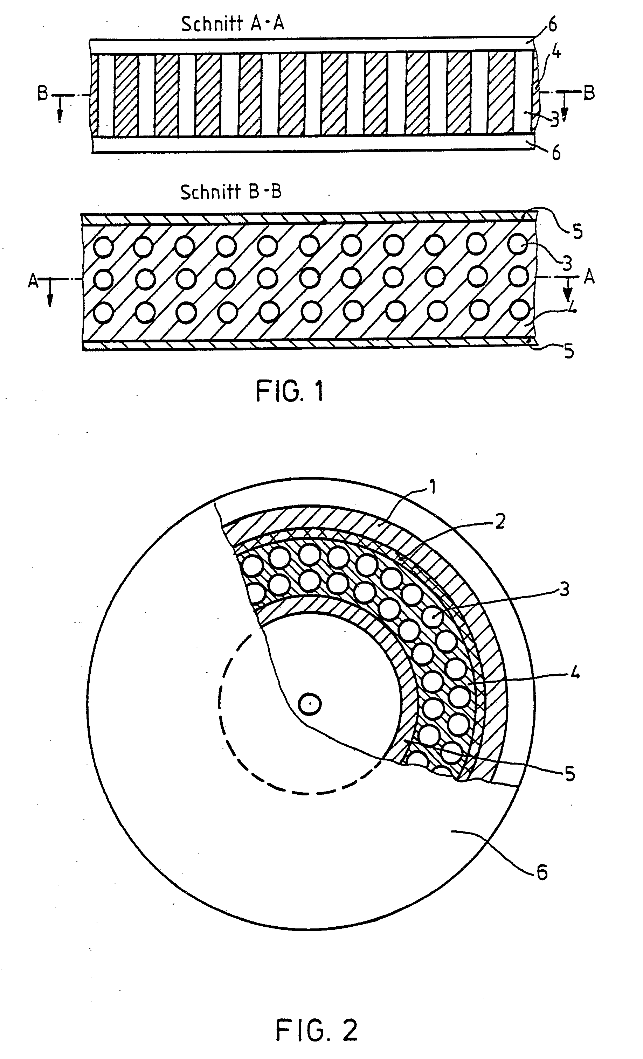

Fig. 1 zeigt einen Querschnitt durch einen solchen Körper. Es bedeuten: (5) die Deckschicht aus Kunststoff, (3) ein reaktionsharzgebundenes Glasfaserprofil (hier ein Rundstab), (4) das Polymer, das die Zwischenräume zwischen den Glasfaserprofilen (3) ausfüllt, (6) eine Abdeckung aus Kunststoff oder Metall.

Verbundkörper dieser Art haben eine besonders hohe Druckfestigkeit senkrecht zur Schnittebene B der Figur 1.

Zweckmäßigerweise kann der Verbundkörper statt als flächiges Gebilde auch als ein in sich geschlossenes Profil ausgebildet sein. Ein kreisförmiger Körper ist hierfür ein Beispiel. Ein solcher Körper wird im Querschnitt in der Fig. 2 gezeigt. Es bedeuten: (1) eine Ummantelung aus Kunststoff oder Kautschuk, (2) eine Verstärkungsschicht aus polymergebundenen Glasfasern, (3) die polymergebundenen Glasfaserprofile, (4) das die Zwischenräume ausfüllende Polymer, (5) eine Deckschicht aus Kunststoff (hier ein Rohr), (6) eine obere Abdeckung aus Kunststoff oder Metall.

Dieser Körper hat senkrecht zur Schnittebene der Figur 2 eine sehr große Druckfestigkeit. Sie ist bedingt durch die in Längsrichtung angeordneten Glasfasern der Glasfaserprofile und wird dadurch noch verstärkt, daß die Verstärkerschicht (2) und die Deckschicht (5) ein Aufbrechen des Verbundes oder ein Abknicken des Körpers erschweren.

Im besonderen enthalten die erfindungsgemäßen Formkörper reaktionsharzgebundene Glasfaserprofile (3). Solche Profile sind an sich bekannt. Sie werden im allgemeinen hergestellt durch Tränken eines aus Rovings hergestellten Bündels paralleler endloser Glasfasern mit einem Reaktionsharz (ungesättigter Polyester, Epoxidharz) und thermisches Aushärten des Harzes. Man kann solche Profile durch mehrere bekannte Verfahren herstellen. Es ist auch möglich, die Profile während oder nach ihrer Herstellung mit Fasern zu umwickeln. Die Profile haben im allgemeinen einen kreisförmigen Querschnitt, obwohl auch andere Formen möglich sind und besitzen Durchmesser von ca. 1 bis ca. 15 mm. Werden die Profile alternativ zu den bisher erwähnten Geometrien als Hohlprofil ausgeführt, so haben diese einen tragenden Querschnitt zwischen 5 mm² und 200 mm².

Die Anzahl der Stäbe und ihre Packungsdichte richtet sich nach der geforderten Druckfestigkeit bzw. Flächenpressung. Die Zwischenräume werden mit Polymer, z.B. härtenden Polyesterharzen, ausgefüllt, wobei natürlich darauf geachtet werden muß, daß nur schrumpfarmes oder nicht schrumpfendes Material verwendet wird.

Die Deckschicht (5) kann aus Kunststoff bestehen oder aus Kautschuk. Sie kann faserverstärkt sein oder mit einer Verstärkungsschicht (2) kombiniert. Diese Schicht verhindert das Auseinanderbrechen des Körpers bei Druckbelastung infolge des Ausknickens einzelner Stäbe. Für die innere Deckschicht bei einem Körper mit der Gestalt eines Hohlzylinders kann man auch ein Rohr verwenden, z.B. ein Kunststoffrohr. Man baut dann den Formkörper um dieses Rohr herum auf.

Zur Herstellung der Verbundkörper geht man von den bekannten Glasfaserprofilen aus, ordnet eine entsprechende Menge parallel zueinander an und vergießt die Zwischenräume mit dem Füllharz. In einr Ausführungsvariante werden die Zwischenräume ausgeschäumt. Die Deckschicht wird nachträglich aufgebracht oder unmittelbar in diesem Arbeitsgang angeklebt. Bei Formkörpern mit der Gestalt eines Hohlzylinders geht man von einem Rohr, z.B. einem Kunststoffrohr aus, ordnet die Glasfaserprofile um dieses Rohr an und vergießt die Zwischenräume mit Harz. In einer Fertigungsvariante werden die GFK-Profile mittels einer hochgefüllten Spachtelmasse oder eines Schmelzklebers positioniert und mit einer Verstärkungsschicht z.B. durch Umwickeln, fixiert. Ein anderer Fertigungsablauf sieht zunächst die Verklebung mehrerer GFK-Profile zu Viertel- oder Halbschalen vor, die in einem weiteren Arbeitsgang um den Rohrkern angeordnet und fixiert werden.

Die Größe und Gestalt des Formkörpers ist frei wählbar, sie richtet sich nach den Anwendungen. Beispielsweise kann ein mit einer Schutzschicht aus Metall am oberen und unteren Ende versehener Körper in Gestalt eines Hohlzylinders, wie in der Fig. 2 gezeigt, als Stempel zum Offenhalten von Druckpressen oder als Hydraulikstempel im Bergbau eingesetzt werden. Eine vergleichbare Bauart in rechteckiger Ausführung (s. Fig. 1) kann z.B. als Distanzplatte beim Aufspannen von Werkzeugen in Spritzgießmaschinen dienen.

## Ansprüche

Verbundkörper aus parallel zueinander angeordneten reaktivharzverstärkten Glasfaserprofilen, deren Zwischenräume mit einem Reaktionsharz gefüllt sind und der eine Deckschicht aus Kunststoff
oder Kautschuk aufweist.

1/1

Schnitt A-A

Schnitt B-B

FIG. 1

FIG. 2

LeA 26315